# FASCICULE DE BREVET EUROPEEN

(11) **EP 3 303 132 B1**
(45) Date de publication et mention de la délivrance du brevet: **04.09.2019**
(21) Numéro de dépôt: 16731229.7
(22) Date de dépôt: 27.05.2016
(51) Int. Cl.: B64D 11/00

(54) **SEPATEUR DE CLASSES MOBILE POUR CABINE D'AERONEF**
MOBILER KLASSENTEILER FÜR FLUGZEUGKABINE
MOBILE CLASS DIVIDER FOR AIRCRAFT CABIN

(30) Priorité: 29.05.2015 FR 1554872
(43) Date de publication de la demande: 11.04.2018
(73) Titulaire: Zodiac Cabin Interiors Europe, 31770 Colomiers (FR)
(72) Inventeur: VERBEQUE, Jérôme, 31770 Colomiers (FR); BREYNE, Romain, 31170 Tournefeuille (FR); BOURGADE, Jean-Claude, 31770 Colomiers (FR)
(74) Mandataire: Gevers & Orès
(86) Numéro de dépôt international: PCT/FR2016/051257
(87) Numéro de publication internationale: WO 2016/193585

(56) Documents cités:
- DE-C1- 4 119 623
- US-A- 5 238 282
- US-A- 5 351 441

## Description

### 1. Domaine technique de l'invention

L'invention concerne un séparateur de classes mobile destiné à être monté transversalement dans une cabine d'un aéronef s'étendant le long d'une direction longitudinale pour diviser la cabine en deux espaces distincts. L'invention concerne un tel séparateur qui est monté mobile le long de la direction longitudinale pour permettre à un opérateur de déplacer le séparateur le long de la direction longitudinale de la cabine de manière à pouvoir modifier lorsque nécessaire la division opérée par le séparateur de classes mobile.

### 2. Arrière-plan technologique

Le demandeur a déjà proposé un certain nombre de séparateurs de classes mobiles destinés à être montés dans une cabine d'un aéronef pour permettre de délimiter différents espaces dans la cabine. Un tel séparateur permet par exemple de délimiter, de part et d'autre du séparateur de classes mobile, une classe « affaire » et une classe « économique » pour lesquelles les services et prestations sont distinctes. En outre, un tel séparateur est mobile, ce qui permet d'adapter l'espace nécessaire pour chaque classe à chaque vol. Par exemple, si le vol considéré ne comprend que peu de voyageurs en classe « affaire », la cabine peut être réaménagée pour agrandir la classe « économique » et le séparateur de classes mobile est alors déplacé en conséquence pour délimiter les espaces ainsi redéfinis.

Par exemple, les demandes FR2893003 et FR2893004 au nom du demandeur décrivent des séparateurs pour diviser l'espace intérieur d'une cabine d'avion, qui est délimitée par au moins les faces internes de panneaux d'habillage de plafond et qui est équipée d'au moins deux rangées longitudinales parallèles de coffres supérieurs à bagages agencés à proximité des panneaux d'habillage de plafond. Le séparateur comprend en outre au moins un élément transversal de division comportant une traverse supérieure transversale de support dont chaque extrémité libre est guidée longitudinalement au moyen d'une structure associée de guidage qui est située dans une zone intermédiaire entre la partie supérieure des coffres d'une rangée associée de coffres et une portion voisine des panneaux d'habillage de plafond, En outre, la structure de guidage comporte une coulisse dont la rainure reçoit en coulissement longitudinal une extrémité libre de la traverse et au moins une patte de fixation de la coulisse sur laquelle la coulisse est fixée.

Un tel séparateur de classes mobile est techniquement performant, mais il présente l'inconvénient de ne pouvoir être intégré qu'au sein d'une configuration prédéterminée de la cabine d'un avion. En particulier, si la configuration de la cabine est modifiée, par exemple lors du rachat d'un avion par une compagnie aérienne tierce, les dimensions de la nouvelle cabine ne sont pas forcément compatibles avec le séparateur de classes mobile. En effet, le séparateur de classes mobile est configuré pour une largeur prédéterminée de la cabine et toute modification de la largeur intérieure de la cabine, par exemple du fait d'une modification des panneaux d'habillage, entraine une incompatibilité des séparateurs de classes mobiles préalablement utilisés avec l'ancienne configuration de la cabine. Il convient alors de remplacer les séparateurs de classes mobiles avec de nouveaux séparateurs configurés pour la nouvelle cabine.

De même, un séparateur de classes mobile selon l'état de la technique est configuré pour s'adapter à un type particulier d'aéronef et ne peut pas être aisément intégré au sein d'autres types d'aéronefs, en particulier, au sein d'aéronefs dont les cabines présentent des largeurs intérieures différentes les uns des autres.

Le document DE4119623 divulgue un dispositif permettant de diviser des cabines d'aéronefs en groupes de sièges par l'intermédiaire d'un élément séparateur à position variable qui s'étend transversalement à la direction longitudinale d'une cabine d'un aéronef. Le document US5238282 divulgue un séparateur avec une armature ajustable en largeur. Ce séparateur est réglable dans sa largeur pour s'adapter à l'intérieur d'un véhicule appartenant à une gamme de différents types de véhicules. Enfin, un séparateur de classes mobile selon l'état de la technique ne peut être utilisé que dans les parties rectilignes du tronçon de l'aéronef. Il ne peut pas être mis en oeuvre dans les parties non rectilignes de la cabine, telle que la partie conique de l'avant de la cabine de certains aéronefs, tel que par exemple le Boeing 737. Cette portion conique avant d'un aéronef présente la particularité de présenter une largeur qui diminue d'un point prédéterminé de l'avion jusqu'à l'avant de l'aéronef. Il n'est donc pas possible de ménager un séparateur de classes mobile classique sur cette portion conique de l'aéronef. En effet, les séparateurs de classes classiques sont destinés à équiper les tronçons cylindriques des aéronefs qui présentent une largeur fixe sur toute la longueur du tronçon.

### 3. Objectifs de l'invention

L'invention vise à pallier au moins certains des inconvénients des séparateurs de classes connus.

En particulier, l'invention vise aussi à fournir, dans au moins un mode de réalisation de l'invention, un séparateur de classes mobile qui peut être intégré au sein de différentes configurations de cabines d'aéronef, en particulier au sein de configurations présentant des largeurs intérieures distinctes.

L'invention vise aussi à fournir, dans au moins un mode de réalisation, un séparateur de classes mobile qui peut être intégré dans différents types aéronefs.

L'invention vise aussi à fournir, dans au moins un mode de réalisation, un séparateur de classes mobile qui peut être intégré dans une cabine qui présente une largeur non uniforme le long de la direction longitudinale de l'aéronef.

L'invention vise aussi à fournir, dans au moins un mode de réalisation, un séparateur de classes mobile qui peut être utilisé dans les portions coniques d'un aéronef.

L'invention vise aussi à fournir, dans au moins un mode de réalisation, un séparateur de classes mobile configuré pour pouvoir être monté dans un avion commercial du type Boeing 737.

L'invention vise aussi à fournir, dans au moins un mode de réalisation de l'invention, un séparateur de classes mobile qui peut être manoeuvré par un opérateur sans difficultés.

### 4. Exposé de l'invention

Pour ce faire, l'invention concerne un séparateur de classes mobile pour diviser transversalement l'espace intérieur d'une cabine d'un aéronef s'étendant le long d'une direction longitudinale et délimitée par des panneaux d'habillage de plafond, au moins deux rangées latérales de coffres supérieurs à bagages s'étendant longitudinalement à proximité des panneaux d'habillage de plafond, des parois latérales et un plancher, ledit séparateur étant destiné à être monté coulissant le long de rails de guidage portés par les coffres supérieurs à bagages, ledit séparateur comprenant :
- une armature principale transversale s'étendant, une fois le séparateur de classes mobile monté dans la cabine, de part et d'autre des parois latérales de ladite cabine sous lesdits coffres supérieures à bagages et lesdits panneaux d'habillage de plafond,
- au moins deux blocs de guidage portés par ladite armature, chaque bloc de guidage portant des patins de coulissement conformés aux rails de guidage de manière à permettre, une fois le séparateur de classes mobile monté dans ladite cabine, le coulissement dudit séparateur le long des rails de guidage de ladite cabine.

Un séparateur de classes mobile selon l'invention est caractérisé en ce que ladite armature principale comprend des moyens de réglage de sa longueur de manière à pouvoir adapter la longueur dudit séparateur à la distance qui sépare, selon la direction transversale, lesdits rails de guidage de ladite cabine.

Un séparateur de classes mobile selon l'invention est remarquable par la présence d'une armature principale équipée de moyens de réglage de sa longueur. Ainsi, il est possible d'adapter la longueur de l'armature principale à la distance qui sépare les rails de guidage portés par les coffres supérieurs à bagages. Un séparateur de classes mobile selon l'invention peut donc être monté au sein de différentes configurations de la cabine et peut notamment équiper des cabines comprenant de rangées de coffres supérieures à bagages de formes et/ou dimensions diverses. En outre, un séparateur de classes mobile selon l'invention peut équiper des cabines présentant des largeurs intérieures distinctes. Il est donc possible d'utiliser un séparateur de classes mobile selon l'invention avec différents aéronefs, sans que la largeur de la cabine et/ou que l'équipement de la cabine avec un type particulier de coffres supérieurs à bagages ne soit un critère discriminant pour le choix du séparateur de classes mobile. Avec l'invention, on peut adapter la longueur de l'armature principale à la distance qui sépare les deux rails de guidage portés par les coffres supérieurs à bagages.

Avantageusement et selon l'invention, ladite armature principale comprend au moins une coque de liaison et deux ailes latérales solidaires chacune d'un bloc de guidage latéral, lesdites ailes étant montées chacune coulissante dans ladite coque de sorte à pouvoir coulisser spontanément l'une par rapport à l'autre selon la direction transversale de manière à ce que la longueur totale de ladite armature principale puisse être adaptée à la distance, selon la direction transversale, qui sépare lesdits rails de guidage, la coque et lesdites ailes latérales formant lesdits moyens de réglage.

Selon cette variante, le réglage de la longueur de l'armature principale s'adapte spontanément et de manière synchrone à la distance qui sépare les rails de guidage. Ce réglage spontané et synchrone résulte du coulissement spontané des ailes latérales l'une par rapport à l'autre. En particulier, chaque aile latérale est reliée au rail de guidage par l'intermédiaire d'un bloc de guidage. La liaison entre le bloc de guidage et le rail de guidage est telle que le bloc de guidage peut coulisser le long du rail mais ne peut pas se déplacer transversalement par rapport au rail. Chaque aile latérale est en outre reliée de manière coulissante à la coque de liaison. Aussi, tout changement de direction du rail de guidage qui entraille un écartement des rails de guidage l'un par rapport à l'autre (qui résulte par exemple d'un changement de conicité de la cabine) entraine le coulissement de chaque aile latérale dans le bloc de guidage. La longueur de l'armature principale s'adapte donc spontanément et de manière synchrone à la distance, selon la direction transversale, qui sépare les rails de guidage, et donc à tout changement de conicité de la cabine.

Avantageusement et selon l'invention, la coque de liaison comprend un pignon et chaque aile latérale comprend une crémaillère en prise avec ledit pignon, lesdites crémaillères étant agencées en regard l'une de l'autre diamétralement opposées par rapport au pignon.

Selon cette variante, le coulissement des ailes latérales l'une par rapport à l'autre résulte d'un déplacement des crémaillères portées par les ailes latérales par rapport à un pignon porté par la coque de liaison. Selon une variante avantageuse, le pignon présente une symétrie d'axe verticale de sorte que le plan d'engrènement d'une crémaillère avec le pignon est vertical.

Avantageusement et selon l'invention, ladite coque de liaison est la partie centrale de ladite armature principale et s'étend au voisinage du plafond de ladite cabine, une fois le séparateur de classes mobile monté dans ladite cabine.

Selon cette variante, la coque de liaison est la partie centrale de l'armature principale. De préférence, l'armature présente en outre une symétrie d'axe longitudinale de sorte que la coque de liaison est centrée sur le plan de symétrie. Selon cette variante, tout coulissement des ailes latérales l'une par rapport à l'autre résultant d'un déplacement du séparateur le long de la cabine, est symétrique. En d'autres termes, un déplacement du séparateur le long de la cabine entraine, en cas de changement de conicité de la cabine, un coulissement concomitant et synchrone de chaque aile latérale dans la coque de liaison, et la coque de liaison reste centrée sur l'axe de symétrie longitudinale.

Avantageusement et selon l'invention, la coque de liaison porte une plaque de signalisation d'une sortie d'urgence de la cabine.

Selon cette variante avantageuse, la coque de liaison centrée sur l'axe de symétrie longitudinale porte une plaque de signalisation d'une sortie d'urgence. Aussi, quel que soit l'écartement entre les ailes latérales, la plaque de signalisation reste centrée sur l'axe de symétrie du séparateur, ce qui est conforme aux règles aéronautiques.

Avantageusement et selon l'invention, pour chaque bloc de guidage, les patins de coulissement sont montés pivotant par rapport à ladite armature principale de manière à pouvoir s'orienter suivant la direction des rails, lors du déplacement du séparateur le long de la direction longitudinale.

Selon cette variante, le séparateur peut s'adapter facilement à tout changement de conicité de la cabine qui se traduit par un changement de direction des rails de guidage. Le pivotement des patins de coulissement par rapport à l'armature principale permet d'aligner l'axe des patins de coulissement avec l'axe des rails de guidage quelle que soit la direction des rails de guidage.

Avantageusement et selon l'invention, les patins comprennent un équipage amont et un équipage aval monté chacun pivotant par rapport à ladite armature principale de sorte que les équipages amont et aval puissent être désaxés l'un par rapport à l'autre pour pouvoir franchir des zones de changement de direction des rails (résultant d'un changement de conicité de la cabine).

Cette variante permet de franchir sans difficultés les zones de changement de conicité de la cabine. En effet, l'équipage amont et l'équipage aval peuvent chacun présenter une orientation distincte de sorte que lors des changements de conicité des rails, l'équipage amont peut présenter une première orientation correspondant à une première direction des rails et l'équipage aval peut présenter une deuxième orientation correspondant à une deuxième direction des rails, les première et deuxième directions des rails définissant le changement de conicité de la cabine.

Avantageusement et selon l'invention, au moins un bloc de guidage comprend au moins un doigt de verrouillage commandé par une poignée de verrouillage entre une position de verrouillage dans laquelle il s'étend hors du bloc de guidage pour pouvoir se loger dans un insert de verrouillage formé dans le rail de guidage en regard de ce bloc de guidage, et une position de déverrouillage dans laquelle il est rétracté dans ledit bloc de guidage et libéré dudit insert de verrouillage pour permettre le déplacement du séparateur le long des rails de guidage.

Selon cette variante, le séparateur de classes mobile comprend des moyens de verrouillage formés d'un doigt de verrouillage monté sur le bloc de guidage et conformé à des inserts de verrouillage formés dans le rail de guidage. De préférence, chaque rail de guidage comprend une pluralité d'inserts de verrouillage régulièrement répartis le long du rail de guidage de sorte à former une pluralité de positions de verrouillage. Aussi, un opérateur peut actionner la poignée de verrouillage pour mettre le doigt de verrouillage dans la position de déverrouillage, lui permettant de déplacer le séparateur de classes mobile le long des rails de guidage à la position souhaitée. Il peut alors actionner la poignée de verrouillage pour déplacer le doigt vers la position de verrouillage. En pratique, l'opérateur doit déplacer légèrement le séparateur de classes mobile pour que le doigt de verrouillage vienne se loger dans l'insert, de verrouillage le plus proche et être dans ladite position de verrouillage. Ce doigt de verrouillage est par exemple monté sur un ressort, qui pousse le doigt de verrouillage contre l'âme du rail jusqu'à ce qu'il rencontre un insert de verrouillage dans lequel il peut s'étendre pour bloquer le déplacement du séparateur de classes mobile.

L'invention concerne également un aéronef équipé d'au moins un séparateur de classes mobile selon l'invention,

L'invention concerne également un séparateur de classes mobile caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un séparateur de classes mobile selon un mode de réalisation de l'invention,
- la figure 2 est une vue schématique partielle d'une cabine d'aéronef dans laquelle le séparateur de classes mobile de la figure 1 est intégré,
- la figure 3 est une vue schématique en perspective partiellement éclatée du séparateur de classes mobile de la figure 1, sur laquelle les blocs de guidage ne sont pas représentés à des fins de clarté,
- la figure 4 est une vue schématique en perspective de la partie centrale d'un séparateur de classes mobile selon un mode de réalisation de l'invention, dans laquelle les ailes latérales sont rétractées dans la coque de liaison,
- la figure 5 est une vue du séparateur de la figure 4 sur laquelle la coque de liaison n'est pas représentée et sur laquelle les ailes latérales sont dans une position rétractée,
- la figure 6 est une vue du séparateur de la figure 4 sur laquelle la coque de liaison n'est pas représentée et sur laquelle les ailes latérales sont dans une position déployée,
- la figure 7 est une vue schématique en perspective partiellement éclatée de la partie centrale d'un séparateur de classes mobile selon un mode de réalisation de l'invention, sur laquelle la coque de liaison n'est pas représentée,
- la figure 8 est une vue schématique en perspective d'un bloc de guidage d'un séparateur de classes mobile selon un mode de réalisation de l'invention,
- les figures 9a, 9b, 9c, 9d, 9e, 9f sont des vues schématiques en coupe du coulissement d'un bloc de guidage d'un séparateur de classes mobile selon un mode de réalisation de l'invention dans des rails de guidage au niveau d'un changement de conicité de la cabine.

### 6. Description détaillée d'un mode de réalisation de l'invention

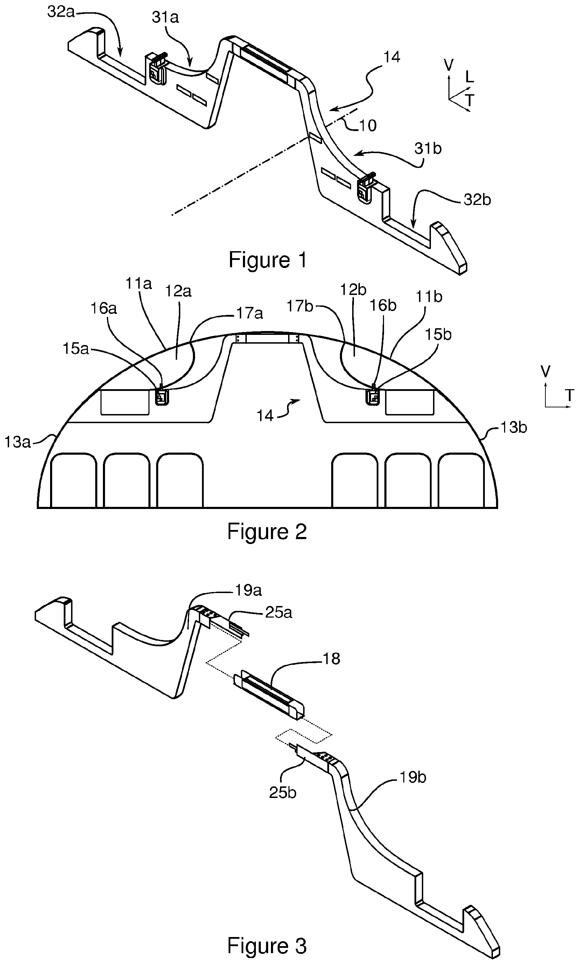

Sur la figure, les échelles et les proportions ne sont pas strictement respectées et ce, à des fins d'illustration et de clarté. Dans toute la description détaillée qui suit en référence aux figures, sauf indication contraire, chaque élément du séparateur de classes mobile est décrit tel qu'il est agencé lorsque le séparateur de classes mobile est monté dans une cabine d'aéronef. Cet agencement, est notamment représenté sur la figure 2. En outre, les éléments identiques, similaires ou analogues sont désignés par les mêmes références. Enfin, les termes longitudinal, transversal et vertical sont utilisés à titre non limitatif en référence au trièdre L, T, V tel que représenté sur les figures. La direction longitudinale correspond à la direction principale de la cabine d'avion.

Tel que représenté sur la figure 2, une cabine d'avion est typiquement délimitée par des panneaux d'habillage 11a, 11b de plafond qui s'étendent transversalement sur toute la largeur de la partie supérieure de la cabine. La cabine comprend également des rangées latérales de coffres 12a, 12b supérieurs à bagages ménagés sous les panneaux d'habillage 11a, 11b. De manière connue, les coffres 12a, 12b sont disposés sur toute la longueur de la cabine, au-dessus des sièges, La cabine comprend également des parois 13a, 13b latérales dans lesquelles sont généralement ménagés des hublots. Enfin, la cabine comprend un plancher sur lequel les sièges des passagers sont agencés.

En outre, des rails 16a, 16b de guidage sont portés par les coffres 12a, 12b supérieurs à bagages. Selon le mode de réalisation des figures, les rails 16a, 16b sont portés par une portion inférieure des coffres 12a, 12b supérieurs à bagages. Dans d'autres modes de réalisation non représentés sur les figures, les rails peuvent être portés par une portion supérieure des coffres supérieurs à bagages, ou directement par les panneaux d'habillage de plafond.

Un séparateur de classes mobile selon l'invention permet de diviser transversalement l'espace intérieur de la cabine.

Le séparateur comprend une armature 14 principale transversale qui s'étend, une fois le séparateur de classes mobile monté dans la cabine, de part et d'autre des parois 13a, 13b latérales de ladite cabine sous les coffres 12a, 12b supérieurs à bagages, Cette armature 14 principale présente une forme conformée aux coffres à bagages et aux parois latérales et autorisant une ouverture des coffres 12a, 12b supérieurs à bagages. Cette ouverture de chaque coffre s'effectue par le haut pour faciliter l'accès aux coffres par les passagers. Chaque coffre présente donc une porte montée articulée par rapport aux panneaux d'habillage autour d'un axe de rotation. Cet axe de rotation est représenté par les références 17a, 17b sur la figure 2. La forme de l'armature est déterminée de telle sorte à permettre le pivotement de chaque porte de chaque coffre par rapport à cet axe de rotation.

Pour ce faire, l'armature comprend, pour chaque rangée de coffres à bagages 12a, 12b, une zone 31a, 31b de découpe présentant une forme conformée à la forme de la coupe transversale des coffres supérieurs à bagages et autorisant l'ouverture des coffres supérieurs à bagages. En outre, l'armature comprend, pour chaque rangée de coffres à bagages 12a, 12b, une zone 32a, 32b de découpe présentant une forme conformée et conjuguée à la forme de modules portés par les coffres à bagages. Ces modules comprennent typiquement des liseuses pour chaque passager et des logements de stockage de masques à oxygène.

Selon le mode de réalisation des figures, le séparateur comprend en outre deux blocs 15a, 15b de guidage portés par l'armature 14 en regard des rails 16a, 16b de guidage. Chaque bloc de guidage est agencé sur l'armature 14 principale de sorte qu'une zone de découpe des coffres à bagages est agencée entre une extrémité libre de l'armature et ce bloc de guidage. Ces blocs 15a, 15b de guidage sont configurés pour pouvoir coulisser dans des rails 16a, 16b de guidage portés par les coffres 12a, 12b supérieurs à bagages. Le coulissement du séparateur de classes mobile le long des rails de guidage permet de déplacer le séparateur de classes mobile le long de la cabine pour l'amener en position d'une zone de délimitation d'un changement de classes au sein de la cabine.

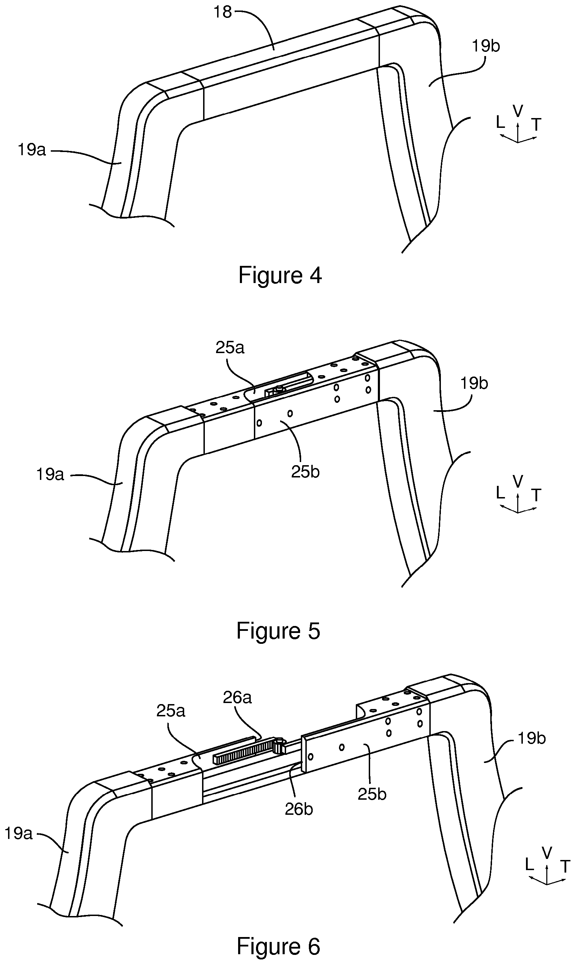

Le séparateur selon l'invention comprend en outre des moyens de réglage de la longueur de l'armature 14 principale. Ces moyens de réglage sont formés, selon le mode de réalisation des figures, et tel que représenté notamment sur la figure 3, par une coque 18 de liaison et deux ailes 19a, 19b latérales solidaires chacune d'un bloc 15a, 15b de guidage latéral. Les ailes 19a, 19b sont montées coulissantes dans la coque 18 de liaison de manière à pouvoir passer d'une position rétractée dans laquelle chaque aile est en butée contre une surface d'appui de l'aile latérale opposée à une position déployée dans laquelle chaque aile est écartée de l'aile opposée. La figure 5 représente les ailes latérales 19a, 19b dans la position rétractée et la figure 6 représente les ailes latérales 19a, 19b dans la position déployée. Sur les figures 5 et 6, seules les parties des ailes latérales 19a, 19b au voisinage de la partie centrale de la cabine sont représentées. Les parties extrêmes comprenant notamment les blocs de guidage ne sont pas représentées sur ces figures à des fins de clarté. En outre, la partie supérieure de la coque 18 de liaison n'est pas représentée sur ces figures également à des fins de clarté. Cette coque 18 recouvre les extrémités des ailes latérales et est représentée sur la figure 4, dans la position rétractée des ailes latérales. La coque 18 de liaison fait à la fois office de cache des extrémités des ailes latérales et d'organe de liaison entre les ailes latérales.

Les ailes latérales 19a, 19b présentent chacune au niveau de l'extrémité au voisinage du bloc de liaison, une extension 25a, 25b qui s'étend, lorsque les ailes sont dans la position rétractée, en regard de l'extension de l'aile opposée. Chaque extension présente en outre une extrémité 26a, 26b qui forme une surface de butée contre l'aile opposée dans la position rétractée.

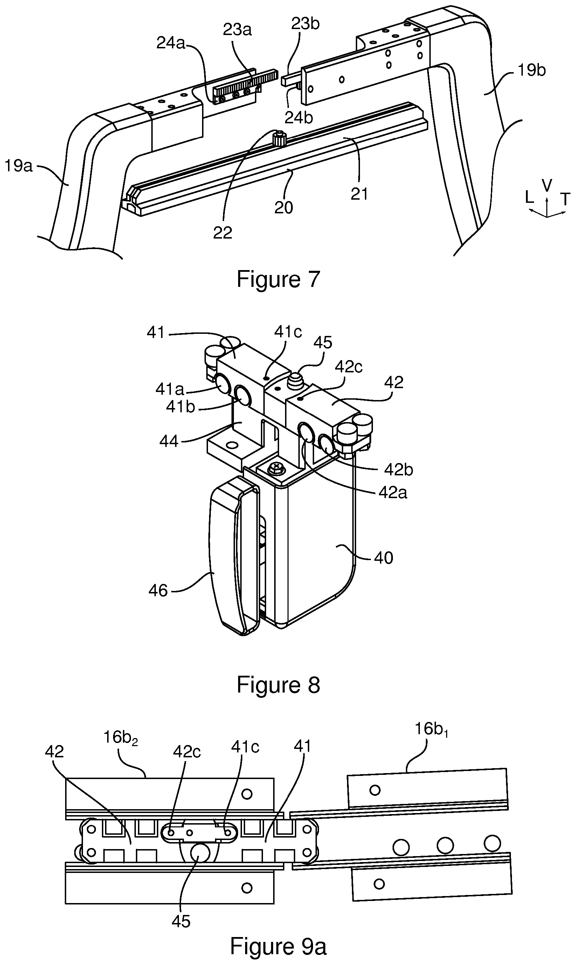

La coque 18 de liaison comprend, tel que représenté sur la figure 7, une base 20 qui porte une réglette 21 sur laquelle un pignon 22 est monté pivotant autour d'un arbre vertical. L'arbre du pignon 22 s'étend verticalement de sorte que le pignon 22 peut tourner sur lui-même dans un plan horizontal. Le pignon 22 comprend des dentures conjuguées aux dentures de crémaillères 23a, 23b portées respectivement par chaque aile latérale. Les crémaillères s'étendent selon la direction transversale et sont orientées de telle sorte que leurs dentures soient en regard des dentures de la crémaillère de l'aile opposée. Elles sont en prise avec le pignon 22 de manière diamétralement opposée. Chaque aile latérale est en outre équipée de chariots 24a, 24b configurés pour pouvoir rouler sur les parties latérales de la base 20. Ainsi, les ailes latérales 19a, 19b peuvent s'écarter l'une de l'autre. Ce déplacement résulte par exemple d'un changement de direction des rails de guidage. En effet, les ailes latérales sont fixées à leur extrémité opposées aux rails de guidage par les blocs 15a, 15b de guidage. Ces blocs 15a, 15b de guidage sont montés en coulissement dans les rails 16a, 16b de guidage de sorte que les blocs de guidage solidaires des ailes suivent la direction des rails 16a, 16b de guidage de la cabine. Un changement de conicité de la cabine entraine donc un écartement ou un rapprochement des rails 16a, 16b de guidage l'un par rapport à l'autre. Cet écartement ou ce rapprochement des rails entraine automatiquement le coulissement des ailes latérales l'une par rapport à l'autre, ce coulissement étant mécaniquement réalisé par le déplacement des crémaillères 23a, 23b dans le pignon 22.

Un séparateur selon l'invention peut donc adapter automatiquement sa longueur à la distance qui sépare les rails de guidage dans la direction transversale.

En outre, lors du déplacement des ailes latérales l'une par rapport à l'autre, la coque 18 de liaison reste en position par rapport à la cabine. Les ailes latérales coulissent l'une par rapport à l'autre dans la coque 18 de liaison de manière synchrone, sans générer un déplacement de la coque 18 de liaison. Ceci permet par exemple de positionner des panneaux de signalisation, par exemple pour signaler un chemin de sortie d'urgence, sur la coque 18 de liaison tout en garantissant que ces panneaux de signalisation restent en position visible par les passagers quel que soit l'écartement des ailes latérales l'une par rapport à l'autre.

De plus, la coque 18 de liaison peut porter solidairement sur sa face inférieure une tringle de rideau. Un rideau peut être monté sur cette tringle pour bien délimiter l'espace entre les différentes classes délimitées par le séparateur de classes mobile, Chaque aile latérale comprend en outre une cavité, non représentée sur les figures, dans laquelle une extrémité latérale de la tringle peut venir se loger lors d'un rapprochement des ailes latérales l'une par rapport à l'autre.

Les blocs de guidage 15a, 15 vont maintenant être décrits en lien avec la figure 8. Un tel bloc de guidage comprend, selon le mode de réalisation des figures, un équipage amont 41 et un équipage aval 42. Les termes amont et aval sont utilisés par rapport à l'orientation de la cabine de l'avion. L'équipage amont 41 comprend des patins 41a, 41b de coulissement et l'équipage aval 42 comprend des patins 42a, 42b de coulissement.

Chaque équipage est monté pivotant par rapport à un corps 40 du bloc de guidage. Le corps 40 est fixé solidairement à l'armature 14 principale de sorte que chaque équipage est pivotant par rapport à l'armature 14 principale. Selon le mode de réalisation des figures, le corps 40 et chaque équipage sont reliés solidairement l'un avec l'autre par l'intermédiaire d'un étrier 44 vissé sur le corps 40.

L'équipage amont 41 est monté pivotant autour d'un axe 41c vertical et l'équipage 42 est monté pivotant autour d'un axe 42c vertical. Les équipages amont et aval sont orientés, au repos, suivant la direction longitudinale pour pouvoir coulisser dans les rails de guidages. Le montage par pivotement de chaque équipage par rapport à l'armature 14 principale permet à chaque équipage d'être désaxé par rapport à la direction longitudinale en cas de changement de direction des rails de guidage.

Les figures 9a à 9f présentent cette aptitude des équipages amont 41 et aval 42 à pouvoir adapter leur orientation à la direction des rails 16b1, 16b2 de guidage, permettant ainsi au séparateur selon ce mode de réalisation de franchir les zones de changement de conicité de la cabine d'un aéronef.

Sur les figures 9a à 9f, deux rails 16b1, 16b2 sont représentés, dits ci-après rail amont 16b1 et rail aval 16b2. Ces rails présentent une orientation distincte l'un de l'autre pour pouvoir s'adapter au changement de conicité de la cabine. Sur la figure 9a, les équipages 41, 42 sont tous les deux logés en coulissement dans le rail aval 16b2. Seule la partie extrême de l'équipage 41 amont est engagée dans le rail amont 16b1.

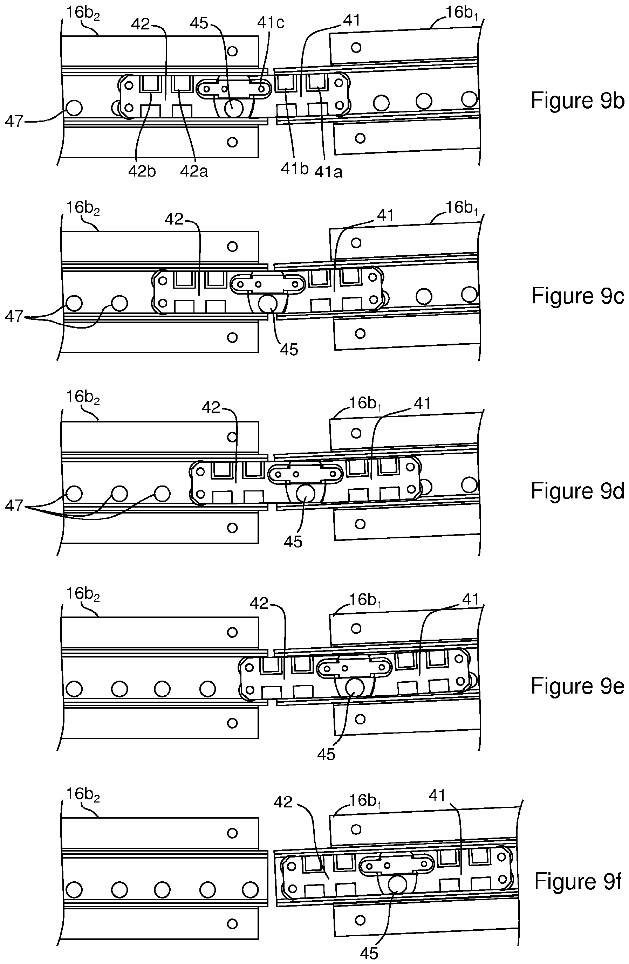

Sur la figure 9b, l'équipage amont 41 est bien engagé dans le rail amont 16b1. L'équipage amont 41 a donc pivoté autour de son axe 41c. Aussi, les équipages amont 41 et aval 42 sont désaxés l'un par rapport à l'autre et suive chacun la direction du rail dans lequel ils sont en coulissement.

Sur la figure 9c, l'équipage amont 41 est entièrement logé dans le rail amont 16b1.

Sur la figure 9d, l'équipage aval 42 s'engage dans le rail amont 16b1. Aussi, il pivote autour de son axe 42c pour pouvoir s'aligner avec la direction du rail amont 16b1.

Sur la figure 9e, le rail aval 42 est bien engagé dans le rail amont 16b1.

Sur la figure 9f, le rail aval 42 est entièrement engagé dans le rail amont 16b1 et les deux équipages sont à nouveau logés chacun dans le même rail de guidage et présentent donc à nouveau la même orientation.

Chaque bloc de guidage comprend en outre un doigt 45 de verrouillage commandé par une poignée 46 de verrouillage entre une position de verrouillage dans laquelle il s'étend hors du bloc de guidage pour pouvoir se loger dans au moins un insert 47 de verrouillage formé dans le rail de guidage, et une position de déverrouillage dans laquelle il est rétracté dans ledit bloc de guidage et libéré dudit insert 47 de verrouillage. En pratique et tel que représenté sur les figures 9a à 9b, chaque rail comprend une pluralité d'inserts 47 de verrouillage répartie uniformément le long du rail pour délimiter une pluralité de positions de verrouillage.

## Revendications

1. Séparateur de classes mobile pour diviser transversalement l'espace intérieur d'une cabine d'un aéronef s'étendant le long d'une direction (10) longitudinale et délimitée par des panneaux d'habillage (11a, 11b) de plafond, au moins deux rangées latérales de coffres supérieurs à bagages (12a, 12b) s'étendant longitudinalement à proximité desdits panneaux d'habillage (11a, 11b) de plafond, des parois latérales (13a, 13b) et un plancher, ledit séparateur étant destiné à être monté coulissant le long de rails (16a, 16b) de guidage portés par lesdits coffres supérieurs à bagages (12a, 12b), ledit séparateur comprenant :
- une armature (14) principale transversale s'étendant, une fois le séparateur de classes mobile monté dans la cabine, de part et d'autre des parois (13a, 13b) latérales de ladite cabine sous lesdits coffres supérieurs à bagages (12a, 12b) et lesdits panneaux d'habillage (11a, 11b) de plafond,
- au moins deux blocs (15a, 15b) de guidage portés par ladite armature (14), chaque bloc (15a, 15b) de guidage portant des patins (41a, 41b, 42a, 42b) de coulissement conformés aux rails (16a, 16b) de guidage de manière à permettre, une fois le séparateur de classes mobile monté dans ladite cabine, le coulissement dudit séparateur le long des rails (16a, 16b) de guidage de ladite cabine,
**caractérisé en ce que** ladite armature (14) principale comprend des moyens de réglage de sa longueur de manière à pouvoir adapter la longueur dudit séparateur à la distance qui sépare, selon la direction transversale, lesdits rails de guidage de ladite cabine.

2. Séparateur selon la revendication 1, **caractérisé en ce que** ladite armature principale comprend au moins une coque (18) de liaison et au moins deux ailes (19a, 19b) latérales solidaires chacune d'un bloc (15a, 15b) de guidage, lesdites ailes (19a, 19b) étant montées chacune coulissante dans ladite coque (18) de liaison de sorte à pouvoir coulisser spontanément l'une par rapport à l'autre selon la direction transversale de manière à ce que la longueur totale de ladite armature (14) principale puisse être adaptée à la distance qui sépare, selon la direction transversale, lesdits rails (16a, 16b) de guidage, la coque (18) de liaison et lesdites ailes (19a, 19b) latérales formant lesdits moyens de réglage.

3. Séparateur selon la revendication 2, **caractérisé en ce que** ladite coque comprend un pignon et chaque aile latérale comprend une crémaillère en prise avec ledit pignon, lesdites crémaillères étant agencées en regard l'une de l'autre diamétralement opposées par rapport au pignon.

4. Séparateur selon l'une des revendications 2 ou 3, **caractérisé en ce que** ladite coque (18) de liaison est la partie centrale de ladite armature (14) principale et s'étend au voisinage desdits panneaux (11a, 11b) d'habillage de plafond de ladite cabine, une fois le séparateur de classes mobile monté dans ladite cabine.

5. Séparateur selon la revendication 4, **caractérisé en ce que** ladite coque (18) de liaison porte une plaque de signalisation d'une sortie d'urgence de la cabine.

6. Séparateur selon l'une des revendications 1 à 5, **caractérisé en ce que** pour chaque bloc (15a, 15b) de guidage, les patins (41a, 41b, 42a, 42b) de coulissement sont montés pivotant par rapport à ladite armature (14) principale de manière à pouvoir s'orienter suivant la direction des rails, lors du déplacement du séparateur le long de la direction (10) longitudinale.

7. Séparateur selon la revendication 6, **caractérisé en ce que** lesdits patins comprennent un équipage (41) amont et un équipage (42) aval monté chacun pivotant par rapport à ladite armature (14) principale de sorte que les équipages amont et aval puissent être désaxés l'un par rapport à l'autre pour pouvoir franchir des zones de changement de direction des rails (16a, 16b) de guidage.

8. Séparateur selon l'une des revendications 1 à 7, **caractérisé en ce qu'**au moins un bloc (15a, 15b) de guidage comprend au moins un doigt (45) de verrouillage commandé par une poignée (46) de verrouillage entre une position de verrouillage dans laquelle il s'étend hors du bloc de guidage pour pouvoir se loger dans un insert (47) de verrouillage formé dans le rail de guidage en regard de ce bloc de guidage, et une position de déverrouillage dans laquelle il est rétracté dans ledit bloc de guidage et libéré dudit insert (47) de verrouillage pour permettre le déplacement du séparateur le long des rails de guidage.

## Patentansprüche

1. Mobiler Klassenteiler zum Quertrennen des Innenraums einer Kabine eines Flugzeugs entlang einer Längsrichtung (10) und begrenzt durch Deckenverkleidungspaneele (11a, 11b), zumindest zwei seitliche Reihen von oberen Gepäckfächern (12a, 12b), die sich in Längsrichtung in der Nähe der Deckenverkleidungspaneele (11a, 11b) erstrecken, Seitenwände (13a, 13b) und einen Boden, wobei der Teiler angepasst ist, um verschiebbar entlang Führungsschienen (16a, 16b) angebracht zu sein, die von den oberen Gepäckfächern (12a, 12b) getragen werden, wobei der Teiler folgende Elemente umfasst:
- ein Querhauptgestell (14), das sich, sobald der mobile Klassenteiler in der Kabine angebracht ist, auf beiden Seiten der Seitenwände (13a, 13b) der Kabine unter den oberen Gepäckfächern (12a, 12b) und den Deckenverkleidungspaneelen (11a, 11b) erstreckt,
- mindestens zwei Führungsblöcke (15a, 15b), die von dem Gestell (14) getragen werden, wobei jeder Führungsblock (15a, 15b) Gleitstücke (41a, 41b, 42a, 42b) trägt, die den Führungsschienen (16a, 16b) übereinstimmen um, sobald der mobile Klassenteiler in der Kabine angebracht ist, das Gleiten des Teilers entlang der Führungsschienen (16a, 16b) der Kabine zu ermöglichen,
**dadurch gekennzeichnet, dass** das Hauptgestell (14) Mittel zum Einstellen seiner Länge umfasst, um die Länge des Teilers an den Abstand anzupassen, der die Führungsschienen der Kabine in Querrichtung trennt.

2. Teiler nach Anspruch 1, **dadurch gekennzeichnet, dass** das Hauptgestell mindestens ein Verbindungsgehäuse (18) und mindestens zwei Seitenflügel (19a, 19b) umfasst, die jeweils mit einem Führungsblock (15a, 15b) zusammenhaltend sind, wobei die Flügel (19a, 19b) jeweils in dem Verbindungsgehäuse (18) verschiebbar gelagert sind, um in Querrichtung relativ zueinander spontan gleiten zu können, so dass die Gesamtlänge des Hauptgestells (14) an den Abstand angepasst werden kann, der in Querrichtung die Führungsschienen (16a, 16b), das Verbindungsgehäuse (18) und die die Einstellmittel bildenden Seitenflügel (19a, 19b) voneinander trennt.

3. Teiler nach Anspruch 2, **dadurch gekennzeichnet, dass** das Gehäuse ein Ritzel umfasst und jeder Seitenflügel eine mit dem Ritzel in Eingriff stehende Zahnstange umfasst, wobei die Zahnstangen einander diametral gegenüberliegend zum Ritzel angeordnet sind.

4. Teiler nach einem der Ansprüche 2 oder 3, **dadurch gekennzeichnet, dass** das Verbindungsgehäuse (18) das zentrale Teil des Hauptgestells (14) ist und sich in der Nähe der Deckenverkleidungspaneele (11a, 11b) der Kabine erstreckt, sobald der mobile Klassenteiler in der Kabine angebracht ist.

5. Teiler nach Anspruch 4, **dadurch gekennzeichnet, dass** das Verbindungsgehäuse (18) eine den Notausgang aus der Kabine zeigende Anzeigeplatte trägt.

6. Teiler nach einem der Ansprüche 1 bis 5, **dadurch gekennzeichnet, dass** für jeden Führungsblock (15a, 15b) die Gleitstücke (41a, 41b, 42a, 42b) relativ zum Hauptgestell (14) schwenkbar gelagert sind, um sich beim Verschieben des Teilers entlang der Längsrichtung (10) in Richtung der Schienen orientieren zu können.

7. Teiler nach Anspruch 6, **dadurch gekennzeichnet, dass** die Gleitstücke eine stromaufwärtige Anlage (41) und eine stromabwärtige Anlage (42) umfassen, die jeweils relativ zum Hauptgestell (14) schwenkbar gelagert sind, so dass die stromaufwärtige und stromabwärtige Anlagen relativ zueinander versetzt werden können, um Richtungswechselzonen der Führungsschienen (16a, 16b) überschreiten zu können.

8. Teil nach einem der Ansprüche 1 bis 7, **dadurch gekennzeichnet, dass** mindestens ein Führungsblock (15a, 15b) mindestens einen Verriegelungsfinger (45) aufweist, der von einem Verriegelungshandhabe (46) zwischen einer Verriegelungsstellung, bei der er aus dem Führungsblock herausragt, um in einen Verriegelungseinsatz (47) untergebracht werden zu können, der in der diesem Führungsblock gegenüberliegenden Führungsschiene ausgebildet ist, und eine Entriegelungsstellung, in der er in dem Führungsblock zurückgezogen ist und von dem Verriegelungseinsatz (47) gelöst ist, um eine Bewegung des Teiler entlang der Führungsschienen zu ermöglichen, gesteuert wird.

## Claims

1. Mobile class divider for transversely partitioning the interior space of a cabin of an aircraft that extends in a longitudinal direction (10) and is delimited by ceiling trim panels (11a, 11b), at least two lateral rows of overhead luggage compartments (12a, 12b) extending longitudinally near to said ceiling trim panels (11a, 11b), lateral walls (13a, 13b) and a floor, said divider being intended to be mounted so as to slide along guide rails (16a, 16b) supported by said overhead luggage compartments (12a, 12b), said divider comprising:
- a transverse main framework (14) extending, once the mobile class divider has been mounted inside the cabin, on either side of the lateral walls (13a, 13b) of said cabin beneath said overhead luggage compartments (12a, 12b) and said ceiling trim panels (11a, 11b),
- at least two guide blocks (15a, 15b) supported by said framework (14), each guide block (15a, 15b) supporting sliding runners (41a, 41b, 42a, 42b) shaped to fit the guide rails (16a, 16b) so as to allow, once the mobile class divider has been mounted inside said cabin, said divider to slide along the guide rails (16a, 16b) of said cabin,
**characterised in that** said main framework (14) comprises means for adjusting the length thereof so as to be able to adapt the length of said divider to the distance, in the transverse direction, that separates said guide rails of said cabin.

2. Divider according to claim 1, **characterised in that** said main framework comprises at least one connecting shell (18) and at least two lateral wings (19a, 19b), each of which is secured to a guide block (15a, 15b), each of said wings (19a, 19b) being mounted such that they slide in said connecting shell (18) so as to be able to slide spontaneously in relation to each other in the transverse direction such that the overall length of said main framework (14) can be adapted to the distance, in the transverse direction, that separates said guide rails (16a, 16b), the connecting shell (18) and said lateral wings (19a, 19b) forming said adjustment means.

3. Divider according to claim 2, **characterised in that** said shell comprises a pinion and each lateral wing comprises a rack in contact with said pinion, said racks being arranged such that they are facing each other and are diametrically opposed relative to the pinion.

4. Divider according to either claim 2 or claim 3, **characterised in that** said connecting shell (18) is the central part of said main framework (14) and extends in the vicinity of said ceiling trim panels (11a, 11b) of said cabin, once the mobile class divider has been mounted inside said cabin.

5. Divider according to claim 4, **characterised in that** said connecting shell (18) bears a sign signalling an emergency exit of the cabin.

6. Divider according to any of claims 1 to 5, **characterised in that** for each guide block (15a, 15b), the sliding runners (41a, 41b, 42a, 42b) are mounted such that they pivot relative to said main framework (14) in order to be able to be oriented in the direction of the rails, during the displacement of the divider in the longitudinal direction (10).

7. Divider according to claim 6, **characterised in that** said runners comprise an upstream assembly (41) and a downstream assembly (42), each of which is mounted such that it pivots relative to said main framework (14) such that the upstream and downstream assemblies can be off-centre from each other in order to be able to cover areas in which the direction of the guide rails (16a, 16b) changes.

8. Divider according to any of claims 1 to 7, **characterised in that** at least one guide block (15a, 15b) comprises at least one locking pin (45) controlled by a locking handle (46) between a locked position in which it protrudes from the guide block so as to be housed in a locking insert (47) formed in the guide rail opposite said guide block, and an unlocked position in which it is retracted into said guide block and released from said locking insert (47) in order to allow the displacement of the divider along the guide rails.
